# EUROPEAN PATENT APPLICATION

(11) **EP 4 811 197 A1**
(43) Date of publication of application: **23.09.2026**
(21) Application number: 26164753.1
(22) Date of filing: 13.03.2026
(51) Int. Cl.: G06F 21/57

(54) **METHOD, SYSTEM AND NON-TRANSITORY COMPUTER READABLE MEDIUM FOR IMPLEMENTING INFORMATION SECURITY CHECKING ON A PROJECT HOSTED ON A CLOUD SERVER**

(30) Priority: 17.03.2025 TW 114109894
(71) Applicant: Cathay Financial Holding Co., Ltd., Taipei City 106436 (TW)
(72) Inventor: YEN, Sheng-Hao, Taipei (TW); YAN, Duan-Yi, 106436 Taipei (TW); WU, Feng-Ming, 106436 Taipei (TW); LI, Zheng-Ting, 106436 Taipei (TW); LIN, Chih-Yu, 106436 Taipei (TW); LIN, Chia-Ching, 106436 Taipei (TW); CHEN, Chia-Liang, 106436 Taipei (TW); CHEN, You-Hsin, 106436 Taipei (TW); TENG, An-Jung, 106436 Taipei (TW)
(74) Representative: Piotrowicz, Pawel Jan Andrzej

(57) **Abstract**

A method for implementing an information security checking operation on a project stored in a cloud server, the method includes: running a checking operation and a scanning operation on a plurality of software programs of the project; in the case where one software program has a weakness that cannot be immediately fixed, transmitting an exception application request to a user end device (2) instructing the user end device (2) to submit an application for an exception; in response to receipt of the application of exception, transmitting the application of exception to a verification end device (3); and, in response to receipt of an allowance of the application from the verification end device (3), putting the project online and starts tracking the software program that has a weakness.

## Description

The disclosure relates to a method, a system and a non-transitory computer readable medium for implementing a checking operation, and more particular to a method, a system and a non-transitory computer readable medium for implementing an information security checking operation on a project that is hosted on a cloud server before launch of the project.

Conventionally, implementation of information security check and management for cloud-based project system requires repetitive manual communication back and forth, which not only incurs high cost of time, but also information asymmetry and project delays. Furthermore, various subjective and objective perspectives from different management personnel may result in divergent security requirements that lacks consistency, making it difficult to achieve a unified standard. In addition, the conventional security check process lacks a consistent security framework for cloud environments, so it is challenging to ensure comprehensive security consistency, and cloud architectures may not always comply with international security standards, thereby producing compliance risks, especially when navigating ever-changing global regulations. Moreover, when a responsible unit encounters a medium-to-high risk vulnerability that cannot be fixed immediately within the project system, there is often a lack of formal documentation and management process, which causes lack of risk management transparency and exception-handling mechanisms, ultimately creating significant compliance gaps.

Therefore, an object of the disclosure is to provide a method that can alleviate at least one of the drawbacks of the prior art.

According to one embodiment of the disclosure, a method includes for implementing an information security checking operation on a project hosted a cloud server is provided as claimed in Claim 1.

Another object of the disclosure is to provide a system that is configured to implement the above-mentioned method.

According to one embodiment of the disclosure, a system for implementing an information security checking operation on a project hosted a cloud server is provided as claimed in Claim 7.

Another object of the disclosure is to provide a non-transitory computer readable storage medium that stores instructions therein, wherein, the instruction, when executed by a processing unit, cause the processing unit to implement steps of the method of Claim 1.

Other features and advantages of the disclosure will become apparent in the following detailed description of the embodiment(s) with reference to the accompanying drawings. It is noted that various features may not be drawn to scale.
Figure 1 is a flow chart illustrating steps of a method for implementing an information security checking operation on a project according to one embodiment of the disclosure.
Figure 2 is a block diagram illustrating an exemplary system for implementing the method according to one embodiment of the disclosure.
Figure 3 illustrates an exemplary tracking list of multiple soft programs included in Project No. 20221006000011 according to one embodiment of the disclosure.
Figure 4 illustrates an exemplary graphical dashboard representing real-time conditions of cloud resources according to one embodiment of the disclosure.
Figure 5 illustrates an exemplary graphical dashboard displaying a list of security events in a time frame according to one embodiment of the disclosure.
Figure 6 illustrates another exemplary graphical dashboard representing security events in different fields according to one embodiment of the disclosure.

Before the disclosure is described in greater detail, it should be noted that where considered appropriate, reference numerals or terminal portions of reference numerals have been repeated among the figures to indicate corresponding or analogous elements, which may optionally have similar characteristics.

Throughout the disclosure, the term "coupled to" or "connected to" may refer to a direct connection among a plurality of electrical apparatus/devices/equipment via an electrically conductive material (e.g., an electrical wire), or an indirect connection between two electrical apparatus/devices/equipment via another one or more apparatus/devices/equipment, or wireless communication.

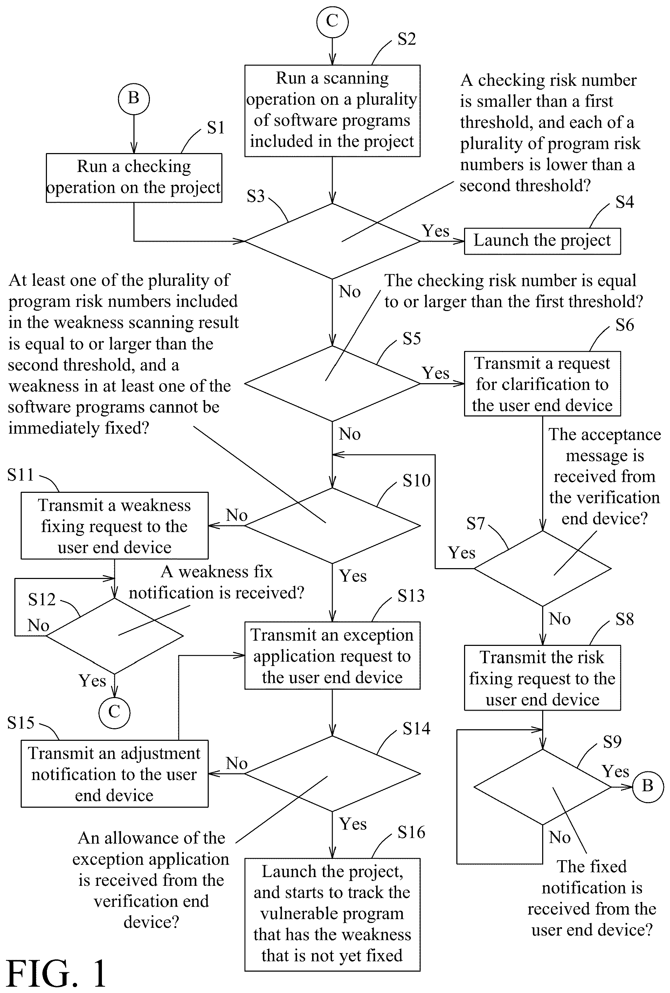

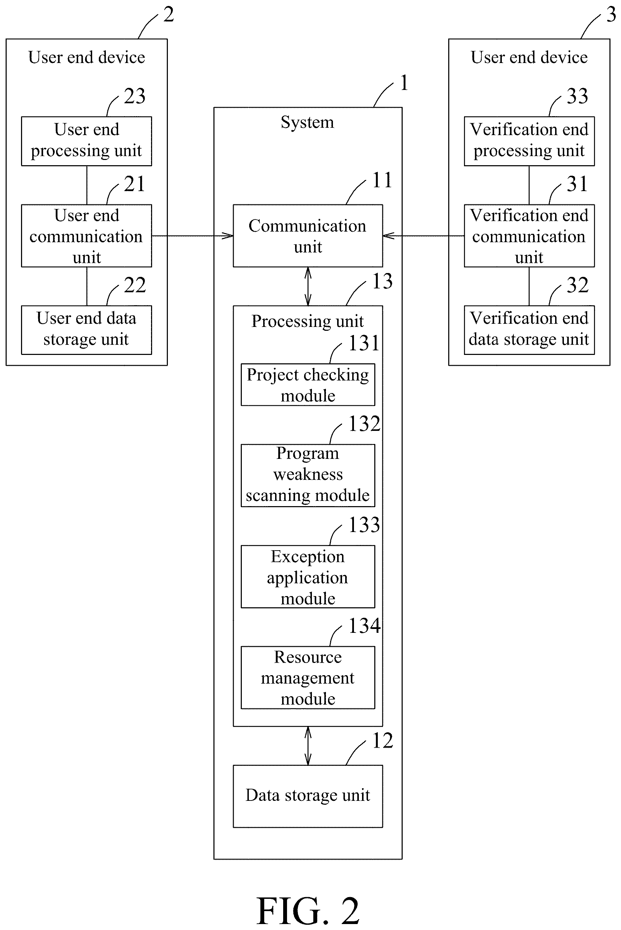

Figure 1 is a flow chart illustrating steps of a method for implementing an information security checking operation on a project according to one embodiment of the disclosure. In the embodiment of Figure 1, the method may be implemented using a system for cloud security checking. Figure 2 is a block diagram illustrating an exemplary system 1 for implementing the method according to one embodiment of the disclosure. The system 1 is configured to perform an information security check on a project that is hosted on a cloud server (not depicted in the drawings) and that is to be launched.

In embodiments, the system 1 may be embodied using a computer device included in the cloud server, and is in communication with a user end device 2 and a verification end device 3 via a network (e.g., the Internet). Each of the user end device 2 and the verification end device 3 may be embodied using one of a personal computer, a desktop computer, a notebook computer, a laptop, a tablet, a smartphone, etc. It is noted that while in the embodiment of Figure 2, only one user end device 2 and one verification end device 3 are present, in some embodiments, additional user end devices 2 and/or verification end devices 3 may be present.

The system 1 includes a communication unit 11, a data storage unit 12 and a processing unit 13. The communication unit 11 includes a communication interface (e.g., an Internet card) that is configured to communicate with the user end device 2 and the verification end device 3 via the network. The data storage unit 12 is connected to the processing unit 13, and may be embodied using a general non-transitory computer readable medium such as, for example, read only memory (ROM), programmable ROM (PROM), flash memory, etc., and stores a project checking module 131, a program weakness scanning module 132, an exception application module 133, and a resource management module 134 therein. Each of the project checking module 131, the program weakness scanning module 132, the exception application module 133, and the resource management module 134 may be embodied using software instructions.

The processing unit 13 is connected to the communication unit 11 and the data storage unit 12, and may be embodied using a central processing unit (CPU), a microprocessor, a microcontroller, a single core processor, a multi-core processor, a dual-core mobile processor, a digital signal processor (DSP), a field-programmable gate array (FPGA), an application specific integrated circuit (ASIC), and/or an RFIC, etc. The processing unit 13 is configured to access the data storage unit 12 to execute the software instructions of each of the project checking module 131, the program weakness scanning module 132, the exception application module 133, and the resource management module 134, so as to implement the operations as described below.

The user end device 2 may include a user end communication unit 21, a user end data storage unit 22 and a user end processing unit 23. The user end communication unit 21 may be embodied using a wireless communication hardware component so as to communicate with the system 1 via the network. The user end data storage unit 22 may store a user end software application therein. The user end processing unit 23 may be embodied using a hardware processing component similar to the processing unit 13, and is configured to execute the user end software application so as to implement the operations as described below.

The verification end device 3 may include a verification end communication unit 31, a verification end data storage unit 32 and a verification end processing unit 33. The verification end communication unit 31 may be embodied using a wireless communication hardware component so as to communicate with the system 1 via the network. The verification end data storage unit 32 may store a verification end software application therein. The verification end processing unit 33 may be embodied using a hardware processing component similar to the processing unit 13, and is configured to execute the verification end software application so as to implement the operations as described below.

It is noted that while in the embodiment of Figure 2, only one user end device 2 and one verification end device 3 are present, in other embodiments, additional user end device(s) 2 and/or verification end device(s) 3 may be present. Each user end device 2 may be held by a developer of the project, and each verification end device 3 may be held by a supervisor who supervises the project to be launched.

In use, when the project (e.g., a client service system) is migrated to the cloud server, and is about to be launched, the method of Figure 1 is executed by a system (e.g., the system 1 of Figure 2) to implement an information security checking operation on the project.

In step S1, the processing unit 13 executes the project checking module 131 to run a checking operation on the project, and to generate, based on the checking operation, a checking result that includes a checking risk number. In embodiments, the project checking module 131 executes an automated process provided by the security command center (SCC) platform for Google Cloud^{®}, in order to determine whether the project has an information security level that is compliant to an information security standard (e.g., ISO 27001), and the checking risk number indicates a risk that the information security level of the project is incompliant to the international standard. By using the automated process, the potential repetitive manual communication may be avoided, which also eliminates divergent security requirements caused by varying subjective and objective perspectives. In addition, management cost caused by constantly changing infrastructure may be reduced. By using the SCC platform to establish a uniform framework for the environment of the cloud server, the architecture of the cloud server may be managed under a consistent security model, and guarantees compliance to international information security standards, thereby boosting total compliance and security.

In step S2, the processing unit 13 executes the program weakness scanning module 132 to run a scanning operation on a plurality of software programs included in the project, and to generate, based on the scanning operation, a weakness scanning result. The weakness scanning result includes, for each of the software programs, a program risk number indicating a risk that the software program has a weakness and, when the software program has a weakness, information about whether the weakness is a minor weakness that can be fixed quickly or a major weakness that requires substantial work to fix. That is, the weakness scanning result includes a plurality of program risk numbers related to the software programs, respectively. It is noted that steps S1 and S2 may be implemented in an arbitrary order, or may be implemented simultaneously.

Then, in step S3, the processing unit 13 determines whether the checking risk number included in the checking result is smaller than a first threshold, and whether each of the plurality of program risk numbers included in the weakness scanning result is lower than a second threshold. In the case where the checking risk number is lower than the first threshold and each of the plurality of program risk numbers is lower than the second threshold, it is deduced that the project has a relatively low risk to be launched, and the flow proceeds to step S4, in which the processing unit 13 launches the project. Otherwise, the flow proceeds to step S5. In some embodiments, the processing unit 13 directly launches the project in step S4, and then the flow of the method is terminated without further tracking the project.

In step S5, the processing unit 13 determines whether the checking risk number included in the checking result is equal to or larger than the first threshold. In the case where the checking risk number included in the checking result is equal to or larger than the first threshold, the flow proceeds to step S6. Otherwise, the flow proceeds to step S10.

In step S6, the processing unit 13 generates a request for clarification regarding the checking risk number, and controls the communication unit 11 to transmit the request for clarification to the user end device 2. In this manner, the user end device 2 receives the request for clarification, and a user operating the user end device 2 (i.e., the developer of the project) is instructed by the request for clarification to provide a response associated with the checking risk number (e.g., a reason why the project carries a high risk of having the information security level incompliant to the information security standard, a solution to a security issue causing the high risk, and so on). After the user operates the user end device 2 to provide the response, the user end processing unit 23 controls the user end communication unit 21 to transmit the response to the verification end device 3. In some embodiments, the user may modify the project so as to fix the security issue causing the high risk of having the information security level incompliant to the information security standard (i.e., the checking risk number equal to or larger than the first threshold), and write the response to reflect the modification made to the project.

In response to receipt of the response to the request for clarification, a verification personnel operating the verification end device 3 (i.e., the supervisor who supervises the project) reviews the response and determines whether the response is sufficient to overcome the security issue causing the high risk of having the information security level incompliant to the information security standard. In the case where the verification personnel deems that the response is sufficient to overcome the security issue, they may operate the verification end device 3 to generate an acceptance message, and the verification end processing unit 33 controls the verification end communication unit 31 to transmit the acceptance message to the system 1. Alternatively, the verification personnel may deem the response insufficient to overcome the security issue, and then generate a rejecting message, and the verification end processing unit 33 controls the verification end communication unit 31 to transmit the rejecting message to the system 1.

In step S7, the processing unit 13 determines whether the acceptance message is received from the verification end device 3. In the case where the acceptance message is received from the verification end device 3, the flow proceeds to step S10 (i.e., the checking risk number is now considered lower than the first threshold). On the other hand, in the cases where the rejecting message is received from the verification end device 3 or the acceptance message is not received after a predetermined time period, the flow proceeds to step S8.

In step S8, the processing unit 13 generates a risk fixing request asking the developer of the project (i.e., the user of the user end device 2) to manually fix the security issue, and controls the communication unit 11 to transmit the risk fixing request to the user end device 2.

In response to receipt of the risk fixing request, the user of the user end device 2 may make further modification to the project so as to fix the security issue, and generate a fixed notification. Then, the user end processing unit 23 controls the user end communication unit 21 to transmit the fixed notification to the system 1.

Then, in step S9, the processing unit 13 determines whether the fixed notification is received from the user end device 2. In the case where the fixed notification is received from the user end device 2, the flow goes back to step S1. Otherwise, the flow remains in step S9 until the fixed notification is received from the user end device 2.

In step S10, the processing unit 13 determines whether at least one of the plurality of program risk numbers included in the weakness scanning result is equal to or larger than the second threshold, and a weakness in at least one of the software programs, which corresponds to the at least one of the plurality of program risk numbers and is referred to as a "vulnerable program" hereinafter, cannot be immediately fixed (i.e., the weakness is a major weakness, and cannot be fixed within, for example, 24 to 48 hours). In the case where the determination is affirmative, it means that the vulnerable program has a major weakness, and the flow proceeds to step S13. Otherwise, when the determination is negative, which means that the vulnerable program may have a minor weakness, the flow proceeds to step S11.

In step S11, the processing unit 13 generates a weakness fixing request, and controls the communication unit 11 to transmit the weakness fixing request to the user end device 2. As such, the user of the user end device 2 is notified to fix any minor weakness contained in the vulnerable program. It is noted that in some embodiments, multiple software programs of the project may contain minor weaknesses, and the weakness fixing request may indicate each of the multiple software programs. After the user has completed fixing of the minor weakness(es), the user may operate the user end device 2 to generate a weakness fix notification, and then the user end processing unit 23 controls the user end communication unit 21 to transmit the weakness fix notification to the system 1.

Then, in step S12, the processing unit 13 determines whether the weakness fix notification is received from the user end device 2. In the case where the weakness fix notification is received from the user end device 2, the flow goes back to step S2. Otherwise, the flow remains in step S12 until the weakness fix notification is received from the user end device 2.

In the case where it is determined that the vulnerable program contains a major weakness that cannot be fixed immediately, in step S13, the processing unit 13 executes the exception application module 133, so as to generate and transmit an exception application request to the user end device 2. The exception application request instructs the user of the user end device 2 to submit an exception application for an exception on the vulnerable program. The exception application generally includes a reason why the weakness of the vulnerable program cannot be fixed immediately, an internal evaluation regarding the vulnerable program, a remedial control protocol for the weakness of the vulnerable program, and an expected time within which the weakness of the vulnerable program must be fixed (e.g., 12 months). After the user operates the user end device 2 to generate the exception application, the user end processing unit 23 controls the user end communication unit 21 to transmit the exception application to the system 1.

In response to receipt of the exception application, the processing unit 13 executing the exception application module 133 stores the exception application in the data storage unit 12, and controls the communication unit 11 to transmit a verification notification associated with the exception application to the verification end device 3.

In response to receipt of the verification notification, the verification personnel may operate the verification end device 3 to review the exception application. In some embodiments, the verification personnel may access the data storage unit 12 of the system 1 to review the exception application. In the case where the exception application is allowed by the verification personnel, they may operate the verification end device 3 to generate an allowance of the exception application and then the verification end processing unit 33 controls the verification end communication unit 31 to transmit the allowance of the exception application to the system 1. Otherwise, the verification personnel may operate the verification end device 3 to generate a rejection of the exception application, and the verification end processing unit 33 controls the verification end communication unit 31 to transmit the rejection of the exception application to the system 1.

In step S14, the processing unit 13 determines whether the allowance of the exception application is received from the verification end device 3. In the case where the allowance of the exception application is received from the verification end device 3, the flow proceeds to step S16. Otherwise, in the case where the rejection of the exception application is received from the verification end device 3, the flow proceeds to step S15.

In step S15, the processing unit 13 executing the exception application module 133 generates an adjustment notification, and controls the communication unit 11 to transmit the adjustment notification to the user end device 2. The adjustment notification may include reasons why the exception application is rejected, and instructions to the user to modify the vulnerable program and/or revise the exception application. Then, the flow goes back to step S13 to generate and transmit another exception application request to the user end device 2.

In step S16, the processing unit 13 launches the project, and starts to track the vulnerable program that has the weakness that is not yet fixed according to the expected time included in the application. For example, the vulnerable program will be tracked and monitored regularly at least for the expected time. In this manner, the project may be launched while the weakness of the vulnerable program may be worked on concurrently.

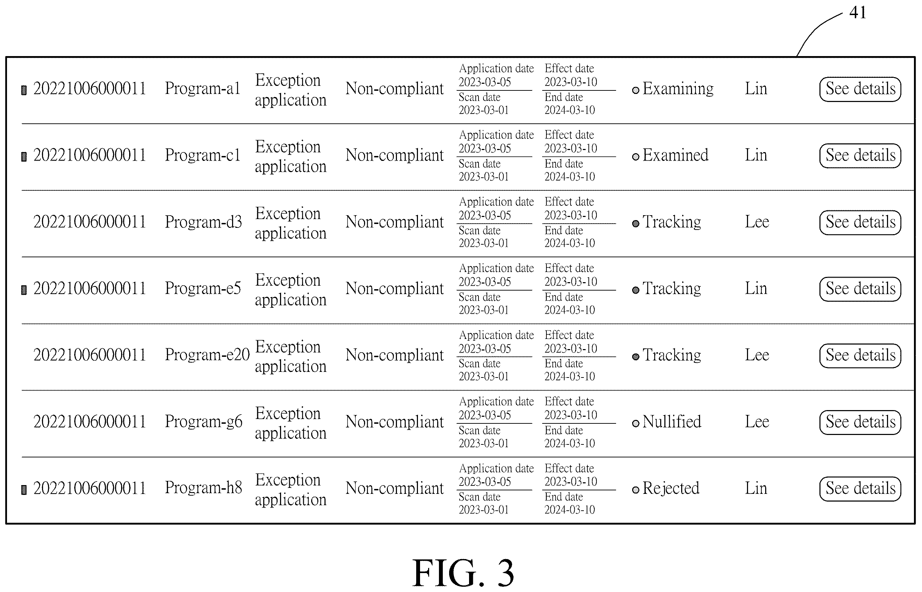

In some embodiments, the system 1 may provide a tracking list of programs with major weaknesses and exception applications. The tracking list may be stored in the data storage unit 12 and may be accessed and displayed on a display (for example, a screen of the verification end device 3). Figure 3 illustrates an exemplary tracking list 41 for Project No. 20221006000011 according to one embodiment of the disclosure. Each row of the tracking list 41 is related to one software program (e.g., "program-a1," "program-c1," "program-d3," "program-e5," "program-e20," "program-g6," or "program-h8") of Project No. 20221006000011, and contains information related to the exception application for the software program, a status (e.g., "under verification," "verified", "in tracking," "expired," "unpassed," and so on) of the software program, an associated developer of the software program, etc. In this way, it is convenient to track conditions of handling weaknesses of software programs.

In some embodiments, the processing unit 13 further executes the resource management module 134 to continuously monitor, according to a predefined rule stored in the data storage unit 12, a resource-usage condition (e.g., an amount of resources of the cloud server being used, subjects having access rights of the project, and so on) of each project that has been launched and is running on the cloud server, to generate a monitoring result 123 containing the resource-usage condition, and to store the monitoring result 123 in the data storage unit 12.

Based on the content of the monitoring result 123 and the predefined rule stored in the data storage unit 12, the processing unit 13 is configured to determine whether each of the software programs included in the project is being run normally (i.e., incompliant with the provision of the predefined rule). For example, the predefined rule provides, for each of the software programs, an allocated resource threshold and a predetermined access permission (i.e., who can or cannot access the software program). The processing unit 13 executing the resource management module 134 determines whether, for each of the software programs, whether the software program is using resources that exceeds the resource threshold and/or whether the software program has an access permission that does not conform with predetermined access permission. In such a case where the software program is incompliant with the predefined rule, the software program may be labeled as "non-compliant" in the corresponding row in the tracking list 41. In some embodiments, when determining that the software program is incompliant with the predefined rule, the processing unit 13 may output an abnormality alert (which can be an acoustic alert or a visual alert), and control the communication unit 11 to transmit an abnormality notification (which may be a text message) to the user end device 2, so as to notify the corresponding developer to correct the software program. In this way, risks may be alleviated and information security may be ensured.

It is noted that generally a number of different projects are simultaneously running on the cloud server, and the monitoring result 123 monitors each of the projects simultaneously.

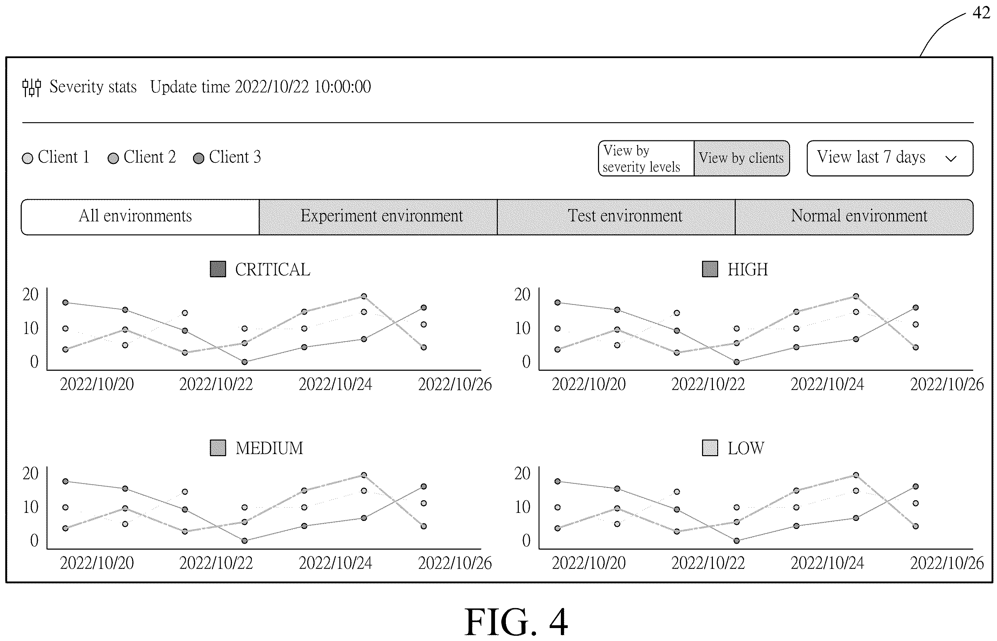

In some embodiments, based on the content of the monitoring result 123, the processing unit 13 is configured to generate a graphical dashboard that may be displayed on the display and that presents real-time conditions of cloud resources used by the projects. Figure 4 illustrates an exemplary graphical dashboard 42 according to one embodiment of the disclosure.

In the embodiment of Figure 4, the project has three clients who are using the project, and the processing unit 13 counts daily security events that have different severity levels (e.g., critical, high, medium, low, etc.) and sort the security events in different line charts. Those security events may be related to different causes that correspond respectively to different options (not shown), such as compliance with the cloud server (this cause corresponds to the option of "Compliance"), a threat to the cloud server (this cause corresponds to the option of "Threat"), a vulnerability of the cloud server (this cause corresponds to the option of "Vulnerability"), and common vulnerability and exposures (CVE) (this cause corresponds to the option of "CVE"). In some embodiments, different line charts may be plotted with respect to each of the causes. In some embodiments, in a case where a number of security events that are critical exceeds a predetermined critical limit, the processing unit 13 may generate a critical alert and control the communication unit 11 to transmit the alert to the corresponding user end device 2, so as to notify the corresponding developer to fix the issue causing the security events.

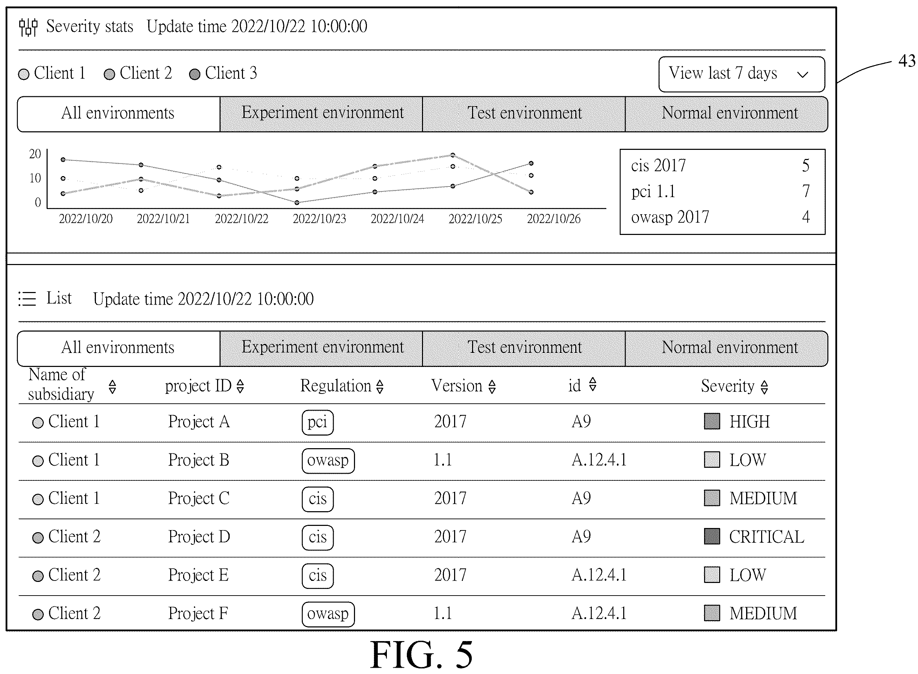

Each of the line charts may be selected to display further information. Figure 5 illustrates an exemplary graphical dashboard 43 according to one embodiment of the disclosure, where the option of "Compliance" is selected. The graphical dashboard 43 may display a list of security events in a time frame, related to a specific client or a specific severity level, etc. In the embodiment of Figure 5, the list of security events in the previous seven days are displayed, each being arranged in an individual row according to a chronological order. Each row may contain information related to the corresponding security event, such as the associated tenant, the associated project, related regulations (e.g., "pci," "owasp," and "cis" as shown in Figure 5), a version of the project, a severity level, etc.

It is noted that in the graphical dashboard 42, a user may be enabled to select other categories for display. For example, the user may intend to see the daily trend of security events related to a specific cause, such as "vulnerability of the cloud server" or "CVE," and another graphical dashboard similar to the graphical dashboard 43 may be generated and display for reviewing. For example, when the option of "Threat" is selected, graphical dashboard 43 may display a threat-statistics page including line charts that show trends of threats detected in different environments, statistics of counts of threats, and a list of threat information. When the option of "Vulnerability" is selected, graphical dashboard 43 may display a vulnerability-statistics page including line charts that show trends of vulnerabilities detected in different environments, statistics of counts of vulnerabilities, and a list of vulnerability information. When the option of "CVE" is selected, graphical dashboard 43 may display a CVE-statistics page including line charts that show trends of CVEs detected in different environments, statistics of counts of CVEs, and a list of CVE information.

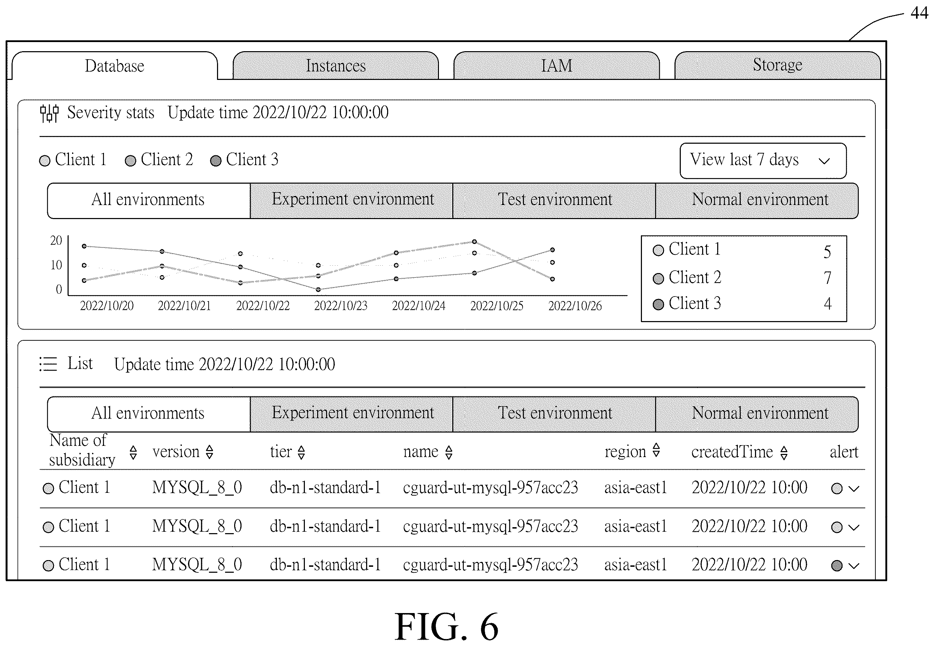

In some embodiments, based on the content of the monitoring result 123, the processing unit 13 is configured to generate a graphical dashboard based on resource usages of an individual client in different fields that may be displayed on the display. Figure 6 illustrates an exemplary graphical dashboard 44 according to one embodiment of the disclosure.

In the graphical dashboard 44, security events in different fields (e.g., access of a database, access of a cloud instance, access of identity and access management (IAM), access of a storage, etc.) of cloud resources may be displayed individually or in combination. By clicking on different tabs on the top of the graphical dashboard 44, security events in individual fields may be viewed. In addition, a manager is able to click a tenant name shown in the graphical dashboard 44 or input an identifier of a project to inspect statistical trends of amounts of various resources (e.g., databases). Moreover, the manager is able to see whether there is any visual alert (i.e., the abnormality alert mentioned previously) shown in a list of the graphical dashboard 44. The visual alert may be implemented to be a red light for indicating occurrence of a violation of the predefined rule, e.g., a database for a project is abnormally used. The processing unit 13 executing the resource management module 134 would send the abnormality notification for each abnormality to the user end devices 2 on a daily basis.

In general, the processing unit 13 executing the resource management module 134 is configured to continuously monitor the projects that are running on the cloud server and generates the monitoring result 123. Based on the monitoring result 123, in a case where the processing unit 13 detects an abnormality (e.g., a security event that is critical) related to one of the projects, the processing unit 13 may generate an abnormality alert and controls the communication unit 11 to transmit an abnormality notification to a corresponding one of the user end devices 2. Additionally, based on the monitoring result 123, the processing unit 13 generates a graphical dashboard that may be displayed on a hardware display screen and that may be interacted with.

To sum up, embodiments of the disclosure provide a method and a system for implementing an information security checking operation on a project hosted on a cloud server before launch of the project. In the method, a project is subjected to a checking operation and a scanning operation to determine whether the project has the information security that is compliant with the information security standard and whether the project has at least one software program that has a weakness. In the case where the weakness can be fixed immediately, the system may notify the developer to fix the weakness. In the case where the weakness cannot be fixed immediately, the developer may apply for an exception, and when the exception application is allowed, the system may launch the project while the software program having a weakness not been fixed yet remains being tracked. Using this configuration, manual communication costs may be reduced and the information security regulations are unified to resolve potential managerial divergence. Additionally, by implementing real-time data monitoring, clients of the cloud server (e.g., enterprises) may quickly identify potential threats and ensured that software programs with weaknesses remain monitored. This may strengthen allocation of responsibility and accountability, eliminate management ambiguity, and enable different teams to focus on remediable items, ultimately enhancing overall resource efficiency of the cloud server.

According to one embodiment of the disclosure, there is provided a non-transitory computer readable storage medium that includes instructions that, when executed by a processing unit, cause the processing unit to implement the method as described above.

In the description above, for the purposes of explanation, numerous specific details have been set forth in order to provide a thorough understanding of the embodiment(s). It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. A method for implementing an information security checking operation on a project hosted a cloud server, the project including a plurality of software programs, the method being implemented by a system (1) included in the cloud server, **characterized in that** the method includes steps of:
a) running, by the system (1) executing a project checking module (131), a checking operation on the project, and generating, based on the checking operation, a checking result that includes a checking risk number;
b) running, by the system (1) executing a program weakness scanning module (132), a scanning operation on the plurality of software programs, and generating, based on the scanning operation, a weakness scanning result that includes a plurality of program risk numbers that are related to the plurality of software programs, respectively;
c) determining, by the system (1), whether the checking risk number included in the checking result is smaller than a first threshold, at least one of the plurality of program risk numbers included in the weakness scanning result is equal to or larger than a second threshold, and a weakness associated with at least one of the software programs cannot be immediately fixed;
d) in response to determining, in step c), that the checking risk number is smaller than the first threshold, at least one of the plurality of program risk numbers is equal to or larger than a second threshold, and a weakness associated with at least one of the software programs cannot be immediately fixed, transmitting, by the system (1) executing an exception application module (133), an exception application request to a user end device (2), the exception application request instructing a user of the user end device (2) to submit an exception application for an exception on the at least one of the software programs, the exception application including a reason why the weakness of the at least one of the software programs cannot be fixed immediately, an internal evaluation regarding the at least one of the software programs, a remedial control protocol for the weakness of the at least one of the software programs, and an expected time for fixing the weakness of the at least one of the software programs;
d) in response to receipt of the exception application, by the system (1) executing the exception application module (133), storing the application in a data storage unit (12), and transmitting a verification notification associated with the exception application to a verification end device (3);
e) in response to receipt of an allowance of the exception application from the verification end device (3), launching the project and starting to track the at least one of the software programs that has the weakness that is not yet fixed according to the expected time for fixing the weakness included in the exception application.

2. The method as claimed in Claim 1, wherein the method further includes, after step b), steps of:
launching the project in response to determining, in step c), that the checking risk number is smaller than the first threshold, and that each of the plurality of program risk numbers is smaller than the second threshold;
in response to determining, in step c), that the checking risk number included in the checking result is equal to or larger than the first threshold, transmitting a request for clarification to the user end device (2);
transmitting, in response to receipt of a response to the request for clarification from the user end device (2), the response to the verification end device (3);
determining, in response to receipt of an acceptance message from the verification end device (3), that the checking risk number included in the checking result is smaller than the first threshold, and repeating step c);
transmitting, in response to receipt of a rejecting message from the verification end device (3), a risk fixing request asking the user of the user end device (2) to manually fix a security issue; and
in response to receipt of a fixed notification from the user end device (2), repeating step a).

3. The method as claimed in any one of Claims 1 and 2, wherein the method further includes, after step b), steps of:
f) determining whether at least one of the plurality of program risk numbers included in the weakness scanning result is equal to or larger than the second threshold, and a weakness associated with at least one of the software programs can be immediately fixed;
g) in response to determining, in step f), that at least one of the plurality of program risk numbers is equal to or larger than the second threshold and a weakness associated with at least one of the software programs can be immediately fixed, transmitting a weakness fixing request to the user end device (2);
h) in response to receipt of a weakness fix notification from the user end device (2), repeating step b).

4. The method as claimed in any one of Claims 1 to 4, wherein the method further includes, after step d), a step of:
i) in response to receipt of a rejection of the exception application from the verification end device (3), transmitting an adjustment notification to the user end device (2), the adjustment notification including reasons why the exception application is rejected, and instructions to the user to modify the at least one of the software programs and revise the exception application.

5. The method as claimed in any one of Claim 1 to 4, the cloud server running a plurality of projects, wherein the method further includes steps of:
executing, by the system (1), a resource management module to continuously monitor the projects that are running on the cloud server and generates a monitoring result;
in response to detecting an abnormality related to one of the projects, generating, based on the monitoring result, an abnormality alert for the one of the projects, and transmitting an abnormality notification for the one of the projects to the user end device (2).

6. The method as claimed in Claim 5, wherein the method further includes a step of:
generating, based on the monitoring result, a graphical dashboard that can be displayed on a hardware display screen and that presents real-time conditions of cloud resources used by the projects.

7. A system (1) for implementing an information security checking operation on a project hosted a cloud server, the project including a plurality of software programs, the system (1) being included in the cloud server and including a communication unit (11), a data storage unit (12) and a processing unit (13), **characterized in that** the processing unit (13) implements the operations of:
running, by the processing unit (13) executing a project checking module (131), a checking operation on the project, and generating, based on the checking operation, a checking result that includes a checking risk number;
running, by the processing unit (13) executing a program weakness scanning module (132), a scanning operation on the plurality of software programs, and generating, based on the scanning operation, a weakness scanning result that includes a plurality of program risk numbers that are related to the plurality of software programs, respectively;
determining whether the checking risk number included in the checking result is smaller than a first threshold, at least one of the plurality of program risk numbers included in the weakness scanning result is equal to or larger than a second threshold, and a weakness associated with at least one of the software programs cannot be immediately fixed;
in response to determining that the checking risk number is smaller than the first threshold, at least one of the plurality of program risk numbers is equal to or larger than a second threshold, and a weakness associated with at least one of the software programs cannot be immediately fixed, transmitting, by the processing unit (13) executing an exception application module (133), an exception application request to a user end device (2), the exception application request instructing a user of the user end device (2) to submit an exception application for an exception on the at least one of the software programs, the exception application including a reason why the weakness of the at least one of the software programs cannot be fixed immediately, an internal evaluation regarding the at least one of the software programs, a remedial control protocol for the weakness of the at least one of the software programs, and an expected time for fixing the weakness of the at least one of the software programs;
in response to receipt of the exception application, storing by the processing unit (13) executing the exception application module (133), the application in the data storage unit (12), and transmitting a verification notification associated with the exception application to a verification end device (3) via the communication unit (11);
in response to receipt of an allowance of the exception application from the verification end device (3), launching the project and starting to track the at least one of the software programs that has the weakness that is not yet fixed according to the expected time for fixing the weakness included in the exception application.

8. The system (1) as claimed in Claim 7, wherein the processing unit (13) further implements, after running the scanning operation, the operations of:
launching the project in response to determining that the checking risk number is smaller than the first threshold, and that each of the plurality of program risk numbers is smaller than the second threshold;
in response to determining that the checking risk number included in the checking result is equal to or larger than the first threshold, transmitting a request for clarification to the user end device (2);
transmitting, in response to receipt of a response to the request for clarification from the user end device (2), the response to the verification end device (3);
determining, in response to receipt of an acceptance message from the verification end device (3), that the checking risk number included in the checking result is smaller than the first threshold, and repeating the determination of whether the checking risk number included in the checking result is smaller than a first threshold, at least one of the plurality of program risk numbers included in the weakness scanning result is equal to or larger than a second threshold, and a weakness associated with at least one of the software programs cannot be immediately fixed;
transmitting, in response to receipt of a rejecting message from the verification end device (3), a risk fixing request asking the user of the user end device (2) to manually fix a security issue; and
in response to receipt of a fixed notification from the user end device (2), repeating the checking operation.

9. The system (1) as claimed in any one of Claims 7 and 8, wherein the processing unit (13) further implements, after running the scanning operation, the operations of:
determining whether at least one of the plurality of program risk numbers included in the weakness scanning result is equal to or larger than the second threshold, and a weakness associated with at least one of the software programs can be immediately fixed;
in response to determining that at least one of the plurality of program risk numbers is equal to or larger than the second threshold and a weakness associated with at least one of the software programs can be immediately fixed, transmitting a weakness fixing request to the user end device (2);
in response to receipt of a weakness fix notification from the user end device (2), repeating running the scanning operation.

10. The system (1) as claimed in any one of Claims 7 to 9, wherein the processing unit (13) further implements, after transmitting the exception application request, the operations of:
in response to receipt of a rejection of the exception application from the verification end device (3), transmitting an adjustment notification to the user end device (2), the adjustment notification including reasons why the exception application is rejected, and instructions to the user to modify the at least one of the software programs and revise the exception application.

11. The system (1) as claimed in any one of Claims 7 to 10, the cloud server running a plurality of projects, wherein the processing unit (13) further implements the operations of:
executing, by the processing unit (13), a resource management module to continuously monitor the projects that are running on the cloud server and generates a monitoring result;
in response to detecting an abnormality related to one of the projects, generating, based on the monitoring result, an abnormality alert for the one of the projects, and transmitting an abnormality notification for the one of the projects to the user end device (2).

12. The system (1) as claimed in Claim 11, wherein the processing unit (13) further implements the operations of:
generating, based on the monitoring result, a graphical dashboard that can be displayed on a hardware display screen and that presents real-time conditions of cloud resources used by the projects.

13. A non-transitory computer readable storage medium that stores instructions therein, **characterized in that**, the instruction, when executed by a processing unit (13), cause the processing unit (13) to implement steps of the method of Claim 1.
